# EUROPÄISCHE PATENTSCHRIFT

(11) **EP 1 655 496 B1**
(45) Veröffentlichungstag und Bekanntmachung des Hinweises auf die Patenterteilung: **22.08.2007**
(21) Anmeldenummer: 05023730.4
(22) Anmeldetag: 31.10.2005
(51) Int. Cl.: F16B 5/02, F16B 5/04, F16B 43/00

(54) **Verfahren zum Herstellen einer Verbindung**
Process for making a connection
Procédé de réalisation d'une liaison

(30) Priorität: 09.11.2004 DE 102004054017
(43) Veröffentlichungstag der Anmeldung: 10.05.2006
(73) Patentinhaber: ElringKlinger AG, 72581 Dettingen/Erms (DE)
(72) Erfinder: Schottner, Gerhard, 90579 Langenzenn (DE)
(74) Vertreter: Bartels, Martin Erich Arthur

(56) Entgegenhaltungen:
- DE-A1- 10 114 295
- FR-A- 2 781 849
- US-A- 3 967 431

## Beschreibung

Die Erfindung betrifft ein Verfahren zum Herstellen einer Verbindung mit mindestens einem Verbindungsbauteil, das mit einem weiteren Verbindungsbauteil mittels mindestens eines Absatzes mit Ausnehmung komplettiert einen Aufnahmespalt begrenzt, in dem ein Aufnahmebauteil über eine vorgebbare Wegstrecke längsverschiebbar geführt und von dem Absatz für einen Festlegevorgang an einem Festlegebauteil durchgreifbar ist.

Durch den Stand der Technik (vergl. beispielsweise nachveröffentlichte DE 10 2004 030 621 A1) sind Strukturbauteile, insbesondere Abschirmteile, bekannt, die man in der Fachwelt auch mit "Hitzeschildern" bezeichnet. Die bekannten Hitzeschild-Lösungen weisen in der Regel einen flächig ausgebildeten Schutzpanzer auf und dienen insbesondere dazu, thermische Motorenkomponenten gegenüber angrenzenden wärmeempfindlichen Aggregaten, wie Sensoren, Kraftstoffleitungen, Druckdosen, Karosserieteilen etc., zu schützen. Dahingehende thermische Motorenkomponenten können aus Abgaskrümmern, Turboladern, Katalysatoren etc. gebildet sein. Ferner erlaubt das Hitzeschild auch eine Reduzierung von Schallemissionen der lärmenden Motorenkomponenten.

Zum Festlegen dahingehender Strukturbauteile, insbesondere Hitzeschildern, an Karosserieteilen von Kraftfahrzeugen, einschließlich deren Motorenkomponenten, wie Abgaskrümmer od. dgl., können Federklammern (vgl. nachveröffentlichte DE 10 2004 030 622 A1) eingesetzt werden, die insbesondere aus Federstahl bestehen und einzelne Klemmschenkel in der Art eines S-förmigen Profiles aufweisen, wobei durch die einzelnen Klemmschenkel Klemmkanäle begrenzt sind für die Aufnahme der randseitigen Bereiche des flächenförmig sich erstreckenden Hitzeschildes. In dem jeweiligen Klemmkanal kann eine federnd nachgiebige Anschlageinrichtung vorgesehen sein, die es erlaubt, thermische Ausdehnungen des Hitzeschildes zu kompensieren, um dergestalt zu jedem Zeitpunkt eine sichere Festlegung des Hitzeschildes über die jeweilige Federklammer mit den genannten Fahrzeugteilen sicherzustellen.

Des weiteren sind im Stand der Technik Lösungen bekannt, wie sie in der Praxis eingesetzt werden, bei der ein Strukturbauteil, wie ein Hitzeschild, mittels einer festen Verbindung, wie einer Schraub- oder Nietverbindung, mit den Fahrzeugteilen an den hierfür vorgesehenen Stellen fest verbunden wird. Zum Herstellen einer dahingehenden Verbindung wird das Hitzeschild zwischen zwei scheibenförmigen Verbindungsbauteilen angeordnet, die über einen zylindrischen Absatz mit kreisrunder Ausnehmung miteinander verbunden sind. Die dahingehende Ausnehmung durchgreift nicht nur den Absatz, sondern auch die beiden scheibenförmigen Verbindungsbauteile nebst einer Stelle im Hitzeschild in einem Bereich, der sich zwischen den beiden scheibenförmigen Verbindungsbauteilen erstreckt. Die dahingehende Ausnehmung dient dem späteren Durchgriff des Schraub- oder Nietverbindungsmittels zum Festlegen des Hitzeschildes an den hierfür vorgesehenen Fahrzeugteilen. Damit das Hitzeschild im Bereich der Verbindungsstelle für einen thermischen Ausgleich sich bewegen kann, ist die Ausnehmung im Hitzeschild entsprechend größer dimensioniert als der stufenförmige Absatz zwischen einem sich an den Absatz anschließenden Fortsatz und der Oberseite des sonstigen Verbindungsbauteils. Die Höhe dieses stufenartigen Absatzes gibt auch das Spaltmaß mit an zwischen den einander zugewandten Seiten der beiden Verbindungsbauteile, die in vorgebbarem Rahmen eine Klemmung für das Hitzeschild vorgeben, wobei die Klemmkraft derart gewählt ist, dass zwar zum einen noch eine sichere Festlegung des Hitzeschildes erreicht ist, zum anderen aber sich das Hitzeschild thermisch bedingt noch in seinen Flächenabmessungen entsprechend verändern, insbesondere ausdehnen kann, ohne dass dies den Erhalt der Schraub- oder Nietverbindung beeinträchtigen würde.

Bei der bekannten Lösung wird das eine Verbindungsbauteil mit stufenförmigem Absatz und Fortsatz mit Ausnehmung als Drehteil aus einem üblichen stangenförmigen Automatendrehstahl hergestellt und nachträglich ist das dahingehende Drehteil zu beschichten, um die durch die spanende Bearbeitung erzeugte mögliche Korrosionsgefahr zu begrenzen. Des weiteren erfährt das Verbindungsbauteil als Drehteil durch die spanende Bearbeitung eine erhöhte Oberflächenrauhigkeit, die das beabsichtigte Verschieben des Hitzeschildes innerhalb des Aufnahmespaltes zwischen den beiden Verbindungsbauteilen erschwert. Da der eingesetzte Automatenstahl regelmäßig ein anderer ist als das Material, aus dem das Hitzeschild bezogen auf seine Decklagen besteht, ergeben sich unterschiedliche Wärmeausdehnungskoeffizienten für die benachbarten Werkstoffe, was zu einem ungewollten Verklemmen des Hitzeschildes an der Stelle der Verbindung führen kann, mit der Gefahr, das die gewollte Verbindung zu den Fahrzeugteilen sich löst. Als weiteres Verbindungsbauteil dient eine Art Gegenscheibe, die aus einem vorher beschichteten Stanzpreßteil besteht, das mit dem einen Verbindungsbauteil über dessen Fortsatz endseitig verbördelt wird. Neben den beschriebenen Nachteilen ist die bekannte Lösung auch ebenso wie die Festlegemöglichkeit über S-Profilklammern aufwendig in der Herstellung und mithin teuer.

Durch die DE-A-101 14 295 ist ein Verfahren zum Herstellen einer Verbindung mit mindestens einem Verbindungsbauteil bekannt, das mit einem weiteren Verbindungsbauteil mittels mindestens eines Absatzes mit Ausnehmung komplettiert einen Aufnahmespalt begrenzt, indem ein Aufnahmebauteil als Hitzeschild konzipiert über einen Presspassungssitz klemmend festgelegt wird. Insoweit ist das Aufnahmebauteil in dem Aufnahmespalt nicht längs verschiebbar geführt und ein Längenausgleich bei thermischer Beanspruchung des Hitzeschildes geschieht über eine Langlochführung unter Einsatz zweier, das Hitzeschild festklemmende Buchsenteile, die das jeweilige Verbindungsbauteil ausbilden und die für einen festen Aneinanderhalt an ihrem einen freien Ende gegeneinander über einen Aufweitvorgang verstemmt sind. Das Herstellen der Langlochführung ist mit einem gewissen Aufwand verbunden und in Abhängigkeit der entstehenden Verwerfungen des Hitzeschildes unter thermischer Beanspruchung von der geometrischen Ausgestaltung schwer festzulegen.

Ausgehend von diesem Stand der Technik liegt der Erfindung die Aufgabe zugrunde, ein Verfahren zum Herstellen einer Verbindung mit zwei Verbindungsbauteilen zu schaffen, die die vorstehend beschriebenen Nachteile nicht aufweist und die sich insbesondere schnell und kostengünstig realisieren läßt. Das erfindungsgemäße Herstellverfahren zum Herstellen einer Verbindung soll auch nicht nur auf den Anwendungsbereich bei Strukturbauteilen, wie Hitzeschildern, eingeschränkt sein. Eine dahingehende Aufgabe löst ein Verfahren mit den Merkmalen des Patentanspruches 1 in seiner Gesamtheit.

Dadurch, dass gemäß dem kennzeichnenden Teil zumindest das eine Verbindungsteil mittels eines Umformvorganges, insbesondere in Form eines Fließpreßvorganges, aus einem Rohling erstellt wird, kann auf die aufwendige Herstellung als Drehteil verzichtet werden. Auch kann für den Umformvorgang des einen Verbindungsteils mit dem Absatz nebst Ausnehmung ein geeignetes korrosionsbeständiges Material verwendet werden, so dass auf aufwendige Beschichtungsverfahren verzichtet werden kann. Insbesondere können die Verbindungsbauteile aus einem Werkstoff bestehen, der dem Werkstoff eines Strukturbauteils, wie ein Hitzeschild, entspricht, mit der Folge, dass zumindest an der Stelle der Verbindung Materialien eingesetzt sind mit gleichem Wärmeausdehnungskoeffizienten, so dass durch thermische Beanspruchung eine gleichmäßige Ausdehnung aller Komponenten an der Stelle der Verbindung vorliegt. Durch den genannten Umformvorgang für das eine Verbindungsteil mit Absatz nebst Ausnehmung ist darüber hinaus eine glatte Oberfläche, zumindest an der Innenseite, erreichbar, die der Oberfläche des Strukturbauteils zugewandt ist, so dass trotz klemmender Festlage das Hitzeschild sich im vorgebbaren Bereich weitgehend hemmnisfrei ausdehnen kann. Das erfindungsgemäße Verfahren ist herstelltechnisch einfach und kostengünstig umsetzbar und kann auch in anderen technischen Bereichen einschließlich der Gebäudetechnik eingesetzt werden.

Weitere vorteilhafte Ausführungsformen des erfindungsgemäßen Verfahrens sind Gegenstand der sonstigen Unteransprüche.

Im folgenden wird das erfindungsgemäße Verfahren anhand eines Ausführungsbeispiels nach der Zeichnung näher erläutert. Dabei zeigen in prinzipieller und nicht maßstäblicher Darstellung die
- Fig. 1: eine Lösung im Stand der Technik;
- Fig.2: eine Vorrichtung zum Durchführen des erfindungsgemäßen Verfahrens und
- Fig. 3a bis 3c: die mit der Vorrichtung nach der Fig.2 in Schrittfolge herstellbaren Teile sowie die
- Fig.3d: das weitere Verbindungsbauteil als Gegenstück zu dem fertigen Verbindungsbauteil nach der Fig.3c.

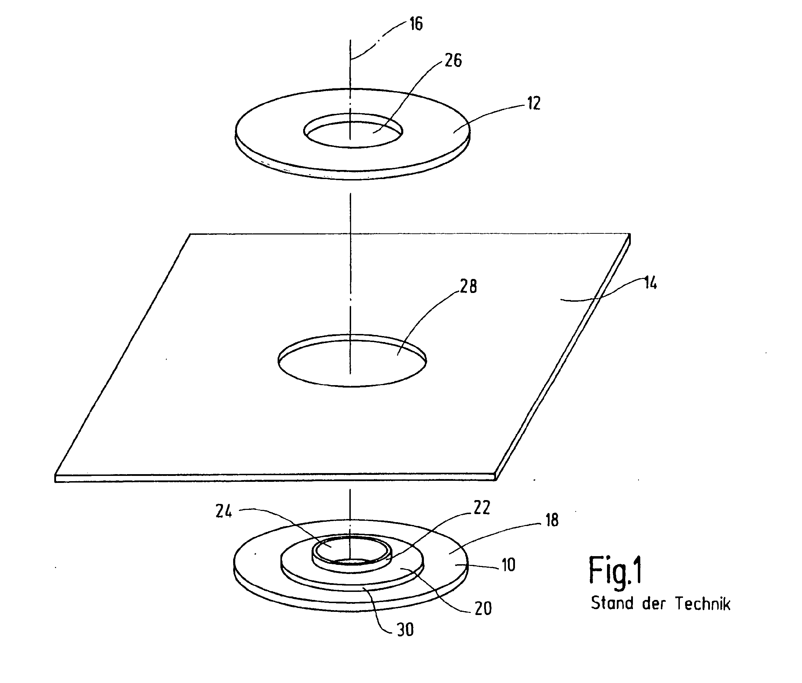

Die Fig.1 zeigt in der Art einer Explosionszeichnung den prinzipiellen Aufbau einer Verbindungslösung, wie sie im Stand der Technik nachweisbar ist. Die bekannte Verbindungslösung weist zwei scheibenförmige Verbindungsbauteile 10,12 auf. Zwischen die beiden Verbindungsteile 10,12 soll ein Strukturbauteil, beispielsweise in Form eines Hitzeschildes 14, aufgenommen und mittels der Bauteile 10,12 festgelegt werden. Die Festlegung soll derart erfolgen, dass das in der Fig.1 nur teilweise und modellhaft wiedergegebene Hitzeschild 14 quer zur Verbindungslängsachse 16, insbesondere bedingt durch thermische Beanspruchung, sich entsprechend ausdehnen und bei Wegfall der Beanspruchung, beispielsweise nach Auskühlen von heißen Motoren-Baukomponenten, sich wieder zusammenziehen kann.

Hierfür weist bei der bekannten Lösung das in Blickrichtung auf die Fig.1 gesehen untere Verbindungsbauteil 10 einen scheibenförmigen Grundkörper 18 auf, hieran anschließend und oberhalb des Grundkörpers 18 eine absatzartige Stufe 20 mit gegenüber dem Grundkörper 18 reduziertem Durchmesser, und auf die absatzartige Stufe 20 folgt wiederum ein röhrenförmiger Fortsatz 22, wobei die genannten Teile 18,20 und 22 einstückig das Verbindungsbauteil 10 ergeben und die genannten Teile erstrecken sich in der in der Fig.1 gezeigten Einbausituation koaxial zur Verbindungslängsachse 16. Des weiteren sind sowohl der Grundkörper 18 als auch die absatzartige Stufe 20 sowie der Fortsatz 22 von einer Ausnehmung 24 durchgriffen, vorzugsweise in der Art einer Mittenbohrung. Als Gegenstück dient in Blickrichtung auf die Fig.1 gesehen das obere Verbindungsbauteil 12, das eine weitere Mittenausnehmung 26 aufweist, deren Durchmesser größer ist als der Durchmesser des zylindrischen Fortsatzes 22. Beim erfolgten Zusammenbau der Verbindung, bei der sowohl die Oberseite des Grundkörpers 18 in Anlage mit dem Hitzeschild 14 ist als auch die Unterseite des scheibenförmigen weiteren Verbindungsteils 12, durchgreift der Fortsatz 22 sowohl die gezeigte Durchtrittsöffnung 28 im Hitzeschild 14 als auch die Mittenausnehmung 26 im Verbindungsbauteil 12.

Das freie obere Ende des Fortsatzes 22 ist dabei im wesentlichen in bündiger Anlage mit der Oberseite des weiteren Verbindungsbauteils 12 und durch einen entsprechenden Bördelvorgang (nicht näher dargestellt), bei der der freie Rand des Fortsatzes 22 in Richtung der Oberseite des Verbindungsbauteils 12 umgelegt wird, entsteht die feste Verbindung der Verbindungsbauteile 10,12 miteinander und der Hitzeschild 14 ist in der Art eines Klemm- oder Schiebesitzes zwischen den beiden Verbindungsbauteilen festgelegt. Die absatzartige Stufe 20 des Verbindungsbauteils 10 greift dabei in die Durchtrittsöffnung 28 des Hitzeschildes 14 ein, wobei die Durchtrittsöffnung 28 im Durchmesser größer gewählt ist als der Außendurchmesser der zylindrischen absatzartigen Stufe 20, um dergestalt bei thermischer Ausdehnung eine Längsverschiebung des Hitzeschildes 14 quer zur Verbindungslängsachse 16 zu ermöglichen.

Des weiteren ist die Höhe der absatzartigen Stufe 20 dem Dickenmaß des Hitzeschildes 14 derart angepaßt, dass zum Festlegen des Hitzeschildes 14 auf diesen zwar eine Klemmkraft über die Verbindungsbauteile 10,12 in deren aneinander festgelegten Stellung erhalten ist, dass die Klemmkraft aber nicht derart groß ist, als dass die genannte Längsverschiebung des Hitzeschildes 14 vermieden wäre. Über die genannten Ausnehmungen 24, und 26 sowie die Durchtrittsöffnung 28 im Hitzeschild 14 greift ein nicht näher dargestelltes Verbindungsmittel, beispielsweise in Form einer Schraube oder eines Nietes, ein, das dergestalt die Festlegung des Hitzeschildes 14 an Fahrzeugteilen (nicht dargestellt), wie Karosserieteilen oder Motorenbauteilen, über die Verbindung mit den beiden Verbindungsbauteilen 10,12 erlaubt. Über das Höhenmaß der absatzartigen Stufe 20 wird mithin geometrisch der Aufnahmespalt 30 vorgegeben für die Festlegung des Aufnahmebauteils in Form des Hitzeschildes 14.

Das Verbindungsbauteil 10 ist bei der Verbindungslösung im Stand der Technik aus einem Drehteil gebildet, das durch spanende Bearbeitung aus einem stangenförmigen Automatendrehstahl od. dgl. erzeugbar ist. Durch die Drehbearbeitung kommt es zu Korrosionserscheinungen, denen man versucht, mit einer entsprechend nachträglich aufgebrachten Oberflächenbeschichtung zu begegnen. Aufgrund der thermischen Ausdehnung des Hitzeschildes 14 reibt sich aber die dahingehende Beschichtung mit der Zeit ab, so dass es im Bereich des Klemmsitzes zu Korrosionserscheinungen kommt. Ferner führt die Drehbearbeitung zu einer erhöhten Oberflächenrauhigkeit, insbesondere im Bereich der oberen Anlagefläche des Grundkörpers 18, die der vorgesehenen freien Verschiebebewegung des Hitzeschildes nachteilig entgegenwirkt und gegebenenfalls die jeweils zugewandte Decklage des Hitzeschildes schädigt. Da die eingesetzten Decklagen für das Hitzeschild 14 vom Material her grundsätzlich anders sind als der für das Bauteil 10 verwendete Drehstahl, kommt es insoweit im Hinblick auf die unterschiedlichen Wärmeausdehnungskoeffizienten zu den bereits genannten Problemen.

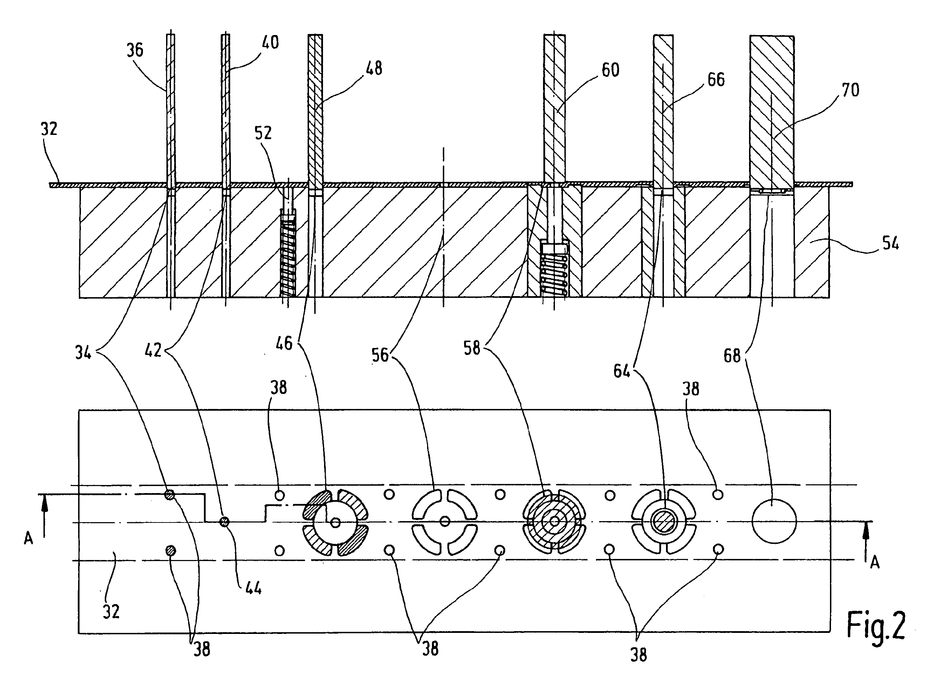

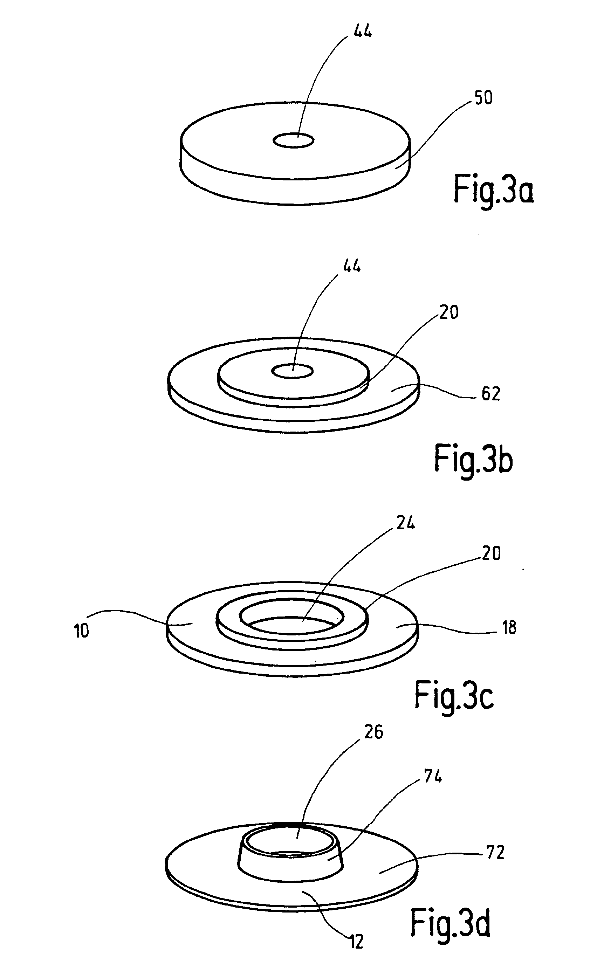

Ausgehend von diesem Stand der Technik wird nachfolgend die verbesserte, erfindungsgemäße Lösung anhand der Fig. 2 und 3 näher erläutert. Die Fig.2 zeigt vom grundsätzlichen Aufbau her eine Herstellvorrichtung für das erfindungsgemäße Verbindungsbauteil 10, wobei in Blickrichtung auf die Fig.2 gesehen die obere Bildhälfte die Umformvorrichtung zeigt längs einer Schnittlinie A - A bezogen auf die untere Bilddarstellung, die eine Draufsicht auf die Vorrichtung gemäß der oberen Darstellung zeigt; jedoch unter Weglassung der in der oberen Bildhälfte gezeigten Loch- und Prägestempel als Umformwerkzeuge.

Der Vorrichtung nach der Fig.2 wird ein bandförmiger Blechstreifen als Blechbahn 32 zugeführt. Dieser erhält in einer ersten Vorlochstation 34 mittels zweier gegenüberliegender Vorlochstempel 36 zwei randseitig verlaufende Perforationsreihen 38, die dem Weitertransport des Bandes durch die einzelnen Stationen nach der Fig.2 dienen, wobei die eigentliche Transporteinrichtung, die mit den Perforationsreihen 38 zusammenwirkt, der einfacheren Darstellung wegen nicht gezeigt ist. Zwischen die beiden Perforationsreihen 38 setzt ein weiterer Vorlochstempel 40 in einer weiteren Vorlochstation 42 ein Zentrierloch 44 und anschließend wird der Streifen 32 in eine Vorschneidstation 46 gebracht, wo ein Vorschneidstempel 48 dem Grund nach aus dem Blechstreifen einen Rohling 50 hervorbringt, wie er näher in der Fig.3a dargestellt ist. Ein Heber 52 stellt sicher, dass auch nach den erfolgten Umformvorgängen der Blechstreifen 32 für seinen Weitertransport von der Preßplatte 54 der Vorrichtung nach der Fig.2 abheben kann. Entsprechende Niederhalter für den Blechstreifen 32 sind der einfacheren Darstellung wegen nicht wiedergegeben.

An die Vorschneidstation 46 schließt sich eine Leerstation 56 an und anschließend gerät der noch mit dem Streifen 32 verbundene, vorausgeschnittene Rohling 50 in eine Prägestation 58, in der ein Prägestempel 60 den Rohling 50 in eine Vorform 62 nach der Fig.3b umformt, die auf der Oberseite die absatzartige Stufe 20 trägt. In der nachfolgenden Fertiglochstation 64 wird über einen korrespondierenden Stempel 66 das Zentrierloch 44 aufgeweitet, so dass die Ausnehmung 24 entsteht in Entsprechung zu der bekannten Lösung nach der Fig.1. Die dahingehende Stufe 20 mit Ausnehmung 24 schließt sich jedoch unmittelbar an die Oberseite des scheibenförmigen Grundkörpers 18 an und der im Stand der Technik bekannte Fortsatz 22 zur Bildung des Umlege-Bördelrandes ist vermieden. Insoweit bildet der einzige ringförmige Überstand die absatzartige Stufe 20 aus, die die Höhe des Aufnahmespaltes 30 für den Hitzeschild 14, wie bereits dargelegt, definiert. In einer weiteren, sich in Blickrichtung auf die Fig.2 gesehen rechts anschließenden Ausschneidstation 68 wird mittels eines Ausschneidstempels 70 das Verbindungsteil 10 definitiv vom Blechstreifen 32 getrennt und aus der Vorrichtung für die weiteren Festlegeschritte der Verbindung abgeführt.

Zum Herstellen der aufgezeigten Verbindung dient dann eine Gegenscheibe 72 als weiteres Verbindungsbauteil 12 (vgl. Fig. 3d), wobei die dahingehende Gegenscheibe 72 ein konisch zulaufendes Einfassungsteil 74 aufweist, das dem Eingriff in die Ausnehmung 24 des Verbindungsbauteils 10 gemäß Darstellung nach der Fig.3c über die Stufe 20 dient. Insoweit wird wiederum das freie Ende des Einfassungsteils 74 umgebördelt und stellt dergestalt an der Rückseite des Grundkörpers 18 des Bauteils 10 die Verbindung zwischen den Verbindungsteilen 10,12 her. Ferner umfaßt das Einfassungsteil 74 wiederum die Mittenausnehmung 26, die dem späteren Durchgriff des Festlegemittels (Schraube, Niet od. dgl.) dient. Für die dahingehende Ausführungsform weist dann das Verbindungsbauteil 10 die Ausnehmung 24 auf, deren freier Querschnitt größer gewählt wird als der Querschnitt der Mittenausnehmung 26 im weiteren Verbindungsbauteil 12 im Hinblick auf den freien Durchtritt des Einfassungsteils 74 in die Ausnehmung 24 für einen Festlegevorgang.

Dem Grund nach wäre es auch möglich, im Rahmen des Umformverfahrens ein Verbindungsbauteil 10 zu erstellen, wie es Gegenstand der Darstellung nach der Fig.1 ist. Dieses könnte dann mit einer entsprechenden, scheibenförmigen Verbindungsbauteil-Anordnung 12, wie in Fig.1 vorgegeben, die gemeinsame Verbindung herstellen. Vorzugsweise ist dabei in beiden Ausgestaltungen für das weitere Verbindungsbauteil 12 gemäß der Darstellung nach der Fig.1 bzw. 3d vorgesehen, dass dieses gleichfalls nicht als Drehteil, sondern als Umformteil hergestellt ist.

Mit der erfindungsgemäßen Verbindungslösung ist eine kostengünstige und schnelle Herstellmethode geschaffen, wobei in vorteilhafter Weise gleiche Materialien sowohl für die beiden Verbindungsbauteile 10,12 als auch zumindest für die Decklagen des Hitzeschildes 14 eingesetzt werden können. Ferner ergeben sich glatte Oberflächen im Rahmen der genannten Umformvorgänge mit dem Vorteil, dass eine freie thermisch bedingte Abgleitbewegung des Hitzeschildes 14 innerhalb der Verbindung hemmnisfrei erreicht ist. Anstelle des Hitzeschildes 14 wäre die aufgezeigte Verbindungslösung auch für andere technische Verbindungszwecke nutzbar, bei der thermisch sich ausdehnende, flächenförmige Bauteile stationär festzulegen sind. Auch können neben den genannten Fahrzeugteilen andere Festlegebauteile in Frage kommen, auch im Bereich der Gebäudetechnik, wo beispielsweise thermisch beanspruchte Fassadenbauteile als Aufnahmebauteile an Stahl-Grundkonstruktionen als Festlegebauteile zu fixieren sind.

## Patentansprüche

1. Verfahren zum Herstellen einer Verbindung mit mindestens einem Verbindungsbauteil (10), das mit einem weiteren Verbindungsbauteil (12) mittels mindestens eines Absatzes (20) mit Ausnehmung (24) komplettiert einen Aufnahmespalt (30) begrenzt, in dem ein Aufnahmebauteil (Hitzeschild 14) über eine vorgebbare Wegstrecke längsverschiebbar geführt und von dem Absatz (20) für einen Festlegevorgang an einem Festlegebauteil durchgreifbar ist, **dadurch gekennzeichnet, dass** zumindest das eine Verbindungsbauteil (10) mittels eines Umformvorganges, insbesondere in Form eines Fließpreßvorganges, aus einem Rohling (50) erstellt wird.

2. Verfahren nach Anspruch 1, **dadurch gekennzeichnet, dass** der Rohling (50) aus einer Ausgangsmatrize gebildet wird, die im nächsten Herstellschritt mittels eines Umformwerkzeuges (60), insbesondere Fließpreßwerkzeuges, mindestens den einen stufenförmigen Absatz (20) erhält, der einstückiger Bestandteil eines Grundkörpers (18) größerer Flächenausdehnung wird.

3. Verfahren nach Anspruch 1 oder 2, **dadurch gekennzeichnet, dass** der Rohling (50) mit einem Zentrierloch (44) versehen wird, das in einem späteren Herstellschritt (64) mit einem größeren Lochdurchmesser versehen die Ausnehmung (24) bildet.

4. Verfahren nach einem der Ansprüche 1 bis 3, **dadurch gekennzeichnet, dass** der Rohling (50) aus einer Blechbahn (32) erhalten wird, insbesondere vorausgeschnitten wird, der zusammen mit der Blechbahn (32) zu den Arbeitsstationen (56,58,64,68) mit den weiteren Herstellschritten transportiert wird.

5. Verfahren nach einem der Ansprüche 2 bis 4, **dadurch gekennzeichnet, dass** bei einem oder mehreren stufenförmigen Absätzen (20) des einen Verbindungsbauteils (10) eine Gegenscheibe (72) mit Einfassungsteil (74) bzw. eine solchen ebenen Zuschnitts als weiteres Verbindungsbauteil (12) verwendet wird.

6. Verfahren nach Anspruch 5, **dadurch gekennzeichnet, dass** das Einfassungsteil (74) der Gegenscheibe (72) in die Ausnehmung (24) des Absatzes (20) des einen Verbindungsbauteils (10) eingreift und dass der freie Rand des Einfassungsteils (74) mit der Rückseite des einen Verbindungsbauteils (10) unter Begrenzung der Ausnehmung (24) verbördelt wird.

7. Verfahren nach Anspruch 5, **dadurch gekennzeichnet, dass** eine Gegenscheibe (72) ebenen Zuschnitts mit ihrer Mittenausnehmung (26) von einem benachbart angeordneten Fortsatz (22) als weiterer Stufenabsatz des einen Verbindungsteils (10) durchgriffen und unter Begrenzung der Ausnehmung (26) mit der Rückseite des weiteren Verbindungsteils (12) verbördelt wird.

8. Verfahren nach einem der Ansprüche 1 bis 7, **dadurch gekennzeichnet, dass** die beiden Verbindungsbauteile (10,12) aus demselben oder einem vergleichbaren Werkstoff gebildet werden wie das festzulegende Aufnahmebauteil (Hitzeschild 14), zumindest im Hinblick auf dessen Materialeigenschaften an der jeweiligen Oberseite.

## Claims

1. Method for producing a connection with at least one connection component (10), which completely delimits a receiving gap (30) together with a further connection component (12) by means of at least one shoulder (20) with a recess (24), within which a receivable component (heat shield 14) is held in a longitudinally displaceable way along a pre-determinable path, and can be engaged by the shoulder (20) for a fitting process to a fitting component, **characterised in that** the at least one connection component (10) is produced from a blank (50) by means of a deforming process, in particular in the form of a flow compression process.

2. Method according to Claim 1, **characterised in that** the blank (50) is formed from a base matrix, which is equipped with the at least one step-shaped shoulder (20) by means of a deforming tool (60), in particular a flow compression tool, during the next production step, and which forms the single piece component of a base body (18) with a larger spatial expansion.

3. Method according to Claim 1 or 2, **characterised in that** the blank (50) is equipped with a centering hole (44) which forms the recess (24) during a subsequent production step (64) once equipped with a larger hole diameter.

4. Method according to one of the Claims 1 to 3, **characterised in that** the blank (50) is produced from a sheet metal band (32), in particular pre-cut, which together with the sheet metal band (32) is transported to the work stations (56, 58, 64, 68) for the further production steps.

5. Method according to one of the Claims 2 to 4, **characterised in that** a counter disc (72) with an enclosing part (74), i.e. a disc with a similar shape is used as a further connection component (12) for one or more step-shaped shoulders (20) of one connection component (10).

6. Method according to Claim 5, **characterised in that** the enclosing part (74) of the counter disc (72) engages the recess (24) of the shoulder (20) of the connection component (10), and **in that** the free edge of the enclosing part (74) is crimped to the back of the connection component (10) and delimits the recess (24).

7. Method according to Claim 5, **characterised in that** a counter disc (72) of a flat construction is engaged by an adjacently located extension (22) as a further stepped shoulder of the connection component (10) with its central recess (26) and is crimped to the back of the further connection component (12) whilst delimiting the recess (26).

8. Method according to one of the Claims 1 to 7, **characterised in that** the two connection components (10, 12) are produced from the same or a comparable material as the receivable component (heat shield 14) to be affixed, at least with regard to its material characteristics on the relevant upper side.

## Revendications

1. Procédé pour produire une liaison avec au moins un composant de liaison (10) qui à l'aide d'au moins un gradin (20) complété par une cavité (24) délimite avec un autre composant de liaison (12) une fente de réception (30) dans laquelle un composant de réception (écran thermique 14) est guidé en se déplaçant en long sur une trajectoire prédéfinie et peut être traversé par le gradin (20) pour une opération de fixation à un composant de fixation, **caractérisé en ce qu'**au moins le composant de liaison (10) est obtenu à partir d'une ébauche (50) par une opération de déformation, en particulier sous forme d'une opération d'extrusion.

2. Procédé selon la revendication 1, **caractérisé en ce que** l'ébauche (50) est formée à partir d'une matrice de départ qui, au cours de l'étape suivante de fabrication à l'aide d'un outil de formage (60), en particulier un outil d'extrusion, est pourvue au moins du gradin (20) en forme de palier qui devient partie intégrante en un seul tenant d'un corps de base (18) dont l'étendue est plus grande.

3. Procédé selon la revendication 1 ou 2, **caractérisé en ce que** l'ébauche (50) est pourvue d'un trou de centrage (44) qui au cours d'une opération ultérieure de fabrication (64) forme la cavité (24) dont le trou a un diamètre plus grand.

4. Procédé selon l'une des revendications 1 à 3, **caractérisé en ce que** l'ébauche (50) provient d'une bande de tôle (32), en particulier est prédécoupée, et est transportée en même temps que la bande de tôle (32) aux postes de travail (56, 58, 64, 68) pendant les autres étapes de fabrication.

5. Procédé selon l'une des revendications 2 à 4, **caractérisé en ce que**, sur un ou plusieurs gradins (20) en forme de palier du composant de liaison (10), on utilise pour servir d'autre composant de liaison (12) une contre-rondelle (72) comportant une partie de saisie (74) ou une découpe plane de ce genre.

6. Procédé selon la revendication 5, **caractérisé en ce que** la partie de saisie (74) de la contre-rondelle (72) pénètre dans la cavité (24) du gradin (20) du composant de liaison (10) et que le bord libre de la partie de saisie (74) est replié avec le côté arrière du composant de liaison (10) en délimitant la cavité (24).

7. Procédé selon la revendication 5, **caractérisé en ce que** grâce à sa cavité centrale (26) une contre-rondelle (72) dont la découpe est plane est traversée par un prolongement (22) situé au voisinage sous forme d'autre gradin en palier du composant de liaison (10) et est replié avec le côté arrière du composant de liaison (12) en délimitant la cavité (26).

8. Procédé selon l'une des revendications 1 à 7, **caractérisé en ce que** les deux composants de liaison (10, 12) sont formés en un matériau identique ou comparable au composant de réception à fixer (écran thermique 14), au moins pour ce qui est des propriétés du matériau sur le côté supérieur correspondant.
